# EUROPEAN PATENT SPECIFICATION

(11) **EP 3 647 173 B1**
(45) Date of publication and mention of the grant of the patent: **12.01.2022**
(21) Application number: 18822646.8
(22) Date of filing: 17.05.2018
(51) Int. Cl.: B62J 41/00, B62J 35/00, B62J 17/10, B62K 11/04, B62M 7/04, B62J 17/02, B62J 50/30, B62J 9/14, B62J 43/20, B62J 43/30

(54) **STRADDLED VEHICLE**
GRÄTSCHSITZFAHRZEUG
VÉHICULE DU TYPE À ENFOURCHER

(30) Priority: 29.06.2017 JP 2017126915
(43) Date of publication of application: 06.05.2020
(73) Proprietor: Honda Motor Co., Ltd., Tokyo 107-8556 (JP)
(72) Inventor: HORIUCHI Tetsu, Wako-shi Saitama 351-0193 (JP); OKADA Naoki, Wako-shi Saitama 351-0193 (JP)
(74) Representative: Dehns
(86) International application number: PCT/JP2018/019188
(87) International publication number: WO 2019/003701

(56) References cited:
- EP-A1- 1 813 521
- EP-A1- 2 921 383
- JP-A- H10 203 457
- JP-A- H10 203 457
- JP-A- 2005 112 308
- JP-A- 2011 073 629
- JP-A- 2012 148 621

## Description

The present invention relates to a straddled vehicle
such as a motorcycle.

Heretofore, a motorcycle has been known in which a radiator is disposed behind a fuel tank, and a deflection plate is disposed behind the radiator so that exhaust air of the radiator flows downward in a vehicle (e.g., see Patent Literature 1).

Japanese Patent No. 3489805 (which is in the same patent family as JP H10 203457 A) is herein referred to as Patent Literature 1.

In Patent Literature 1, exhaust air of a radiator is guided downward by a deflection plate disposed behind the radiator, so that the exhaust air of the radiator is prevented from easily hitting an engine behind the radiator. For example, when the engine having a large displacement is mounted in an identical vehicle body, a size of the radiator increases. Therefore, an excellent flow of air around the radiator needs to be acquired, for example, by changing a size of the deflection plate or a position of an exhaust air outlet provided below the deflection plate.

It is known from EP 2921383 A1 to provide a straddled vehicle such as a motorcycle comprising, behind a front cover, a down frame extending obliquely downward from a head pipe toward a rear, a pair of right and left lower frames extending downward from a right and a left of a lower portion of the down frame and then extending below a step floor toward the rear, and a pair of right and left upper frames extending obliquely downward from a middle portion of the down frame toward the rear to be coupled to the right and left lower frames, wherein a fuel tank is disposed in a space surrounded with the down frame, the right and left lower frames and the right and left upper frames, and wherein the fuel tank comprises a flange extending toward the rear of the vehicle in a side view of the vehicle.

An object of the present invention is to provide a straddled vehicle such as a motorcycle that is capable of acquiring an excellent flow of air around a radiator irrespective of a displacement of an engine.

According to the present invention, there is provided a straddled vehicle such as a motorcycle comprising, behind a front cover, a down frame extending obliquely downward from a head pipe toward a rear, a pair of right and left lower frames extending downward from a right and a left of a lower portion of the down frame and then extending below a step floor toward the rear, and a pair of right and left upper frames extending obliquely downward from a middle portion of the down frame toward the rear to be coupled to the right and left lower frames, wherein a fuel tank is disposed in a space surrounded with the down frame, the right and left lower frames and the right and left upper frames, and wherein the fuel tank comprises a flange extending toward the rear of the vehicle in a side view of
the vehicle,
characterised in that an opening is provided in the front cover, the fuel tank is provided behind the opening, a radiator is disposed behind the fuel tank, a battery is disposed above the radiator, and the battery is stored in a case.

Furthermore, in the above invention, the case may have a double structure.

Additionally, in the above invention, a guide plate may be provided below a storage box under a seat, and the guide plate may be disposed behind the radiator.

Furthermore, in the above invention, the case may constitute a front portion of the storage box, and the guide plate may be provided in the case.

Additionally, in the above invention, the flange may be inclined upward to a front in the side view of the vehicle, and the radiator may be disposed along the flange.

According to the present invention, there is provided a straddled vehicle such as a motorcycle comprising, behind a front cover, a down frame extending obliquely downward from a head pipe toward a rear, a pair of right and left lower frames extending downward from a right and a left of a lower portion of the down frame and then extending below a step floor toward the rear, and a pair of right and left upper frames extending obliquely downward from a middle portion of the down frame toward the rear to be coupled to the right and left lower frames. A fuel tank is disposed in a space surrounded with the down frame, the right and left lower frames and the right and left upper frames, an opening is provided in the front cover, the fuel tank is provided behind the opening, the fuel tank comprises a flange extending toward the rear of a vehicle in a side
view of the vehicle, and a radiator is disposed behind the fuel tank. Consequently, wind taken inside through the opening of the front cover can be guided along the flange of the fuel tank toward the radiator irrespective of a size of the radiator, and an excellent flow of air around the radiator can be acquired.

According to the present invention, a battery is disposed above the radiator, and the battery is stored in a case. Thus, the battery is disposed above the radiator, so that a limited space can be effectively used.

Furthermore, in the above invention, the case may have a double structure. Thus, the battery is stored in the case of the double structure. Consequently, even when the battery is disposed above the radiator, the battery can be hard to be thermally affected by the radiator.

Additionally, in the above invention, a guide plate may be provided below a storage box under a seat, and the guide plate may be disposed behind the radiator. Thus, the guide plate is provided, so that exhaust air of the radiator can be guided to flow, for example, laterally from a rear of the radiator. The exhaust air can be prevented from easily hitting the engine or the like disposed behind the radiator.

Furthermore, in the above invention, the case may constitute a front portion of the storage box, and the guide plate may be provided in the case. Consequently, the guide plate can be provided by using a part of the case, and a member specially to provide the guide plate becomes unnecessary, which can reduce cost.

Additionally, in the above invention, the flange may be inclined upward to a front in the side view of the vehicle, and the radiator may be disposed along the flange. Consequently, the fuel tank and the radiator can be effectively arranged in a vehicle body.

Figure 1 is a left side view showing a motorcycle according to the present invention.
Figure 2 is a left side view showing a state where a vehicle body cover is removed from a vehicle body side part.
Figure 3 is a cross-sectional view showing a battery and its periphery.
Figure 4 is a front view showing the motorcycle.
Figure 5 is a cross-sectional view taken along the V-V line of Figure 4.
Figure 6 is a cross-sectional view taken along the VI-VI line of Figure 1.

Hereinafter, one embodiment of the present invention will be described with reference to the drawings. Note that in the description, front, rear, right, left, up and down directions are the same as in directions to a vehicle body unless otherwise stated. Furthermore, reference sign FR shown in the respective drawings indicates a front of the vehicle body, reference sign UP indicates an upside of the vehicle body, and reference sign LH indicates a left of the vehicle body.

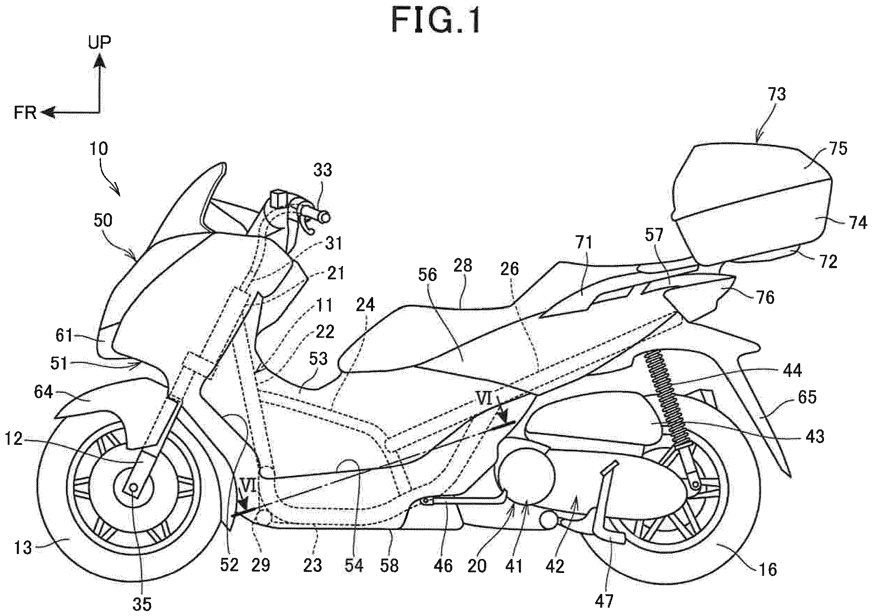

Figure 1 is a left side view showing a motorcycle 10 according to the present invention.

The motorcycle 10 is a straddled vehicle such as a scooter that comprises a front wheel 13 supported in a front end portion of a vehicle body frame 11 via a front fork 12, and a rear wheel 16 supported in a lower part of the vehicle body frame 11 via a power unit 20, the rear wheel 16 being driven by the power unit 20.

The vehicle body frame 11 comprises a head pipe 21, a down frame 22, a pair of right and left lower frames 23, a pair of right and left upper frames 24, and a pair of right and left rear frames 26.

The head pipe 21 is disposed in the front end portion of the vehicle body frame 11, and steerably supports the front fork 12. The down frame 22 extends downward from the head pipe 21, and has a lower end portion connected to a lower cross pipe 29 extending in a vehicle width direction. The right and left lower frames 23 extend downward from a right and a left of a lower portion of the down frame 22, extend rearward, and then extend obliquely upward and rearward. Portions of the right and left lower frames 23 extending in a front-rear direction are disposed below right and left step floors 54 described later in detail, respectively. Both end portions of the lower cross pipe 29 are attached to front lower portions of the right and left lower frames 23.

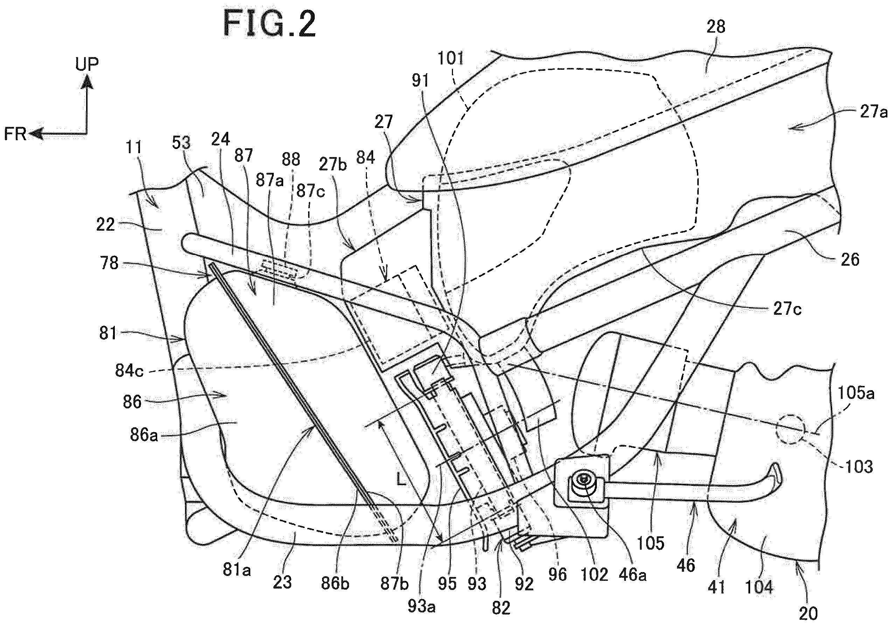

The right and left upper frames 24 extend obliquely downward and rearward from a right and a left of a middle portion of the down frame 22, and are further bent obliquely downward and rearward to be connected to the right and left lower frames 23, respectively. The right and left rear frames 26 extend obliquely upward and rearward from bent portions of the right and left upper frames 24, to support a storage box 27 (see Figure 2). Above the storage box 27, a tandem seat 28 is attached on which a rider and a passenger sit.

Rear end portions of the right and left lower frames 23 are connected to middle portions of the right and left rear frames 26.

The front fork 12 comprises a steering stem 31 rotatably supported by the head pipe 21, and a handlebar 33 is attached to an upper end portion of the steering stem 31. Furthermore, the front wheel 13 is supported by a lower end portion of the front fork 12 via an axle 35.

The power unit 20 is supported swingably in an up-down direction by the lower part of the vehicle body frame 11 via a pivot shaft (not shown), and comprises a water-cooled engine 41 that constitutes a front, and a continuously variable transmission 42 provided integrally with a rear portion of the engine 41. An output shaft is provided in a rear end portion of the continuously variable transmission 42, and the rear wheel 16 is attached to this output shaft. An air cleaner 43 that constitutes an air intake device of the engine 41 is provided above the power unit 20.

A rear cushion unit 44 is disposed across the rear end portion of the continuously variable transmission 42 and the rear of the vehicle body frame 11.

A side stand 46 is attached to the lower part of the vehicle body frame 11, and a main stand 47 is attached to a bottom of the power unit 20.

The vehicle body frame 11 is covered with a vehicle body cover 50. The vehicle body cover 50 comprises a front cover 51, a pair of right and left leg shields 52, a center cover 53, a pair of right and left step floors 54, a pair of right and left side covers 56, a rear center cover 57, and an undercover 58.

The front cover 51 covers a front of the vehicle body frame 11, and a front and both sides of the front fork 12. A head light 61 is disposed in the front cover 51. The right and left leg shields 52 extend inward from both side edges of the front cover 51 in the vehicle width direction to cover rider's legs from the front. The center cover 53 is disposed behind the front fork 12 to cover a space between the right and left leg shields 52, and extends below the tandem seat 28. The right and left step floors 54 are parts on which the rider puts their feet, and extend rearward from respective lower end portions of the right and left leg shields 52. The right and left side covers 56 cover lower portions of both sides of the tandem seat 28. The rear center cover 57 connects rear end portions of the right and left side covers 56. The undercover 58 covers the lower part of the vehicle body.

The front wheel 13 is covered with a front fender 64 from above, and the rear wheel 16 is covered with a rear fender 65 from above.

A grab rail 71 to be grabbed by the passenger is disposed to surround both side portions and a rear portion of the tandem seat 28 above the right and left side covers 56. A rear carrier 72 is attached to the rear portion of the grab rail 71, and a top box 73 to store goods is attached to the rear carrier 72.

The top box 73 is detachably attached to the rear carrier 72, and comprises a box main body 74, and a lid 75 openably and closably provided in a top of the box main body 74. The lid 75 of the top box 73 can be locked, and to release from a locked state, the operator or the passenger who possesses a smart key performs an operation of pushing a switch provided in a lower portion of the rear carrier 72. A tail light 76 is disposed under the rear center cover 57.

Figure 2 is a left side view showing a state where the vehicle body cover 50 is removed from a vehicle body side part.

A fuel tank 81 is disposed in a space 78 surrounded with the down frame 22, the right and left lower frames 23 and the right and left upper frames 24. A radiator 82 is disposed behind the fuel tank 81. A battery 84 stored in the storage box 27 is disposed behind the fuel tank 81 and above the radiator 82.

The fuel tank 81 comprises a front half body 86 disposed on a front side, and a rear half body 87 bonded to a rear side of the front half body 86. Each of the front half body 86 and the rear half body 87 is formed in a cup shape. The front half body 86 includes a cup-shaped main body 86a, and a front flange 86b formed integrally with a rim of the cup-shaped main body 86a. The rear half body 87 includes a cup-shaped main body 87a and a rear flange 87b formed integrally with a rim of the cup-shaped main body 87a, and a refueling port 87c is formed in a top of the cup-shaped main body 87a. The refueling port 87c is closed with a cap 88. The rear flange 87b is bonded to the front flange 86b.

The front flange 86b and the rear flange 87b constitute a flange 81a. The flange 81a is inclined upward to the front in side view, and an upper end portion of the flange 81a is attached to an upper bracket (not shown) provided in each of the right and left upper frames 24. A lower end portion of the flange 81a is attached to a lower bracket (not shown) provided in each of the right and left lower frames 23.

The radiator 82 is disposed to lean forward along the flange 81a of the fuel tank 81, and includes an upper tank 91 and a lower tank 92 that are disposed above and below, and a core 93 connecting the upper tank 91 and the lower tank 92.

Each of the upper tank 91 and the lower tank 92 is connected to the engine 41 via a radiator hose. Guide members 95 that guide running wind flowing on both sides of the fuel tank 81 to a center of the core 93 are attached to both side portions of the core 93. A cooling fan 96 that forcibly guides air into the core 93 to encourage cooling is attached to a rear portion of the core 93.

The storage box 27 comprises a main storage section 27a that stores comparatively large goods, for example, a helmet 101 and the like, and a battery storage section 27b provided in a front portion of the main storage section 27a to store the battery 84.

Since the battery storage section 27b is disposed above the radiator 82 that reaches a high temperature, the battery storage section is formed in a double structure to suppress a thermal influence onto the battery 84.

A guide plate 102 extending downward from a bottom wall 27c side is provided below a front end portion of the bottom wall 27c of the main storage section 27a. The guide plate 102 is disposed behind the radiator 82 and ahead of a cylinder portion 105 that constitutes the engine 41.

Thus, the guide plate 102 guides exhaust air discharged rearward from the radiator 82 so that the air flows laterally and obliquely laterally rearward. The exhaust air can be prevented from easily hitting the cylinder portion 105 that is located behind the guide plate 102 and reaches the high temperature.

The engine 41 comprises a crank case 104 in which a crank shaft 103 extending in the vehicle width direction is stored, and the cylinder portion 105 extending forward from a front end portion of the crank case 104. The cylinder portion 105 comprises a cylinder in which a piston is movably stored, and a cylinder axis 105a that is an axis of this cylinder almost horizontally extends upward to the front.

The guide plate 102 extends from the bottom wall 27c side of the storage box 27 along the core 93 of the radiator 82 in the side view of the vehicle. Furthermore, the guide plate 102 extends toward an oscillating shaft 46a of the side stand 46 provided in one lower frame 23 in the side view of the vehicle.

Furthermore, the guide plate 102 is disposed on an extension line of a center line 93a intersecting the cylinder axis 105a and being drawn in a center of a length L of the core 93 of the radiator 82 in the side view of the vehicle.

The battery 84 is disposed in the battery storage section 27b so that one surface (one front surface) 84c of the rectangular parallelepiped battery 84 is disposed along the flange 81a of the fuel tank 81 in the side view of the vehicle.

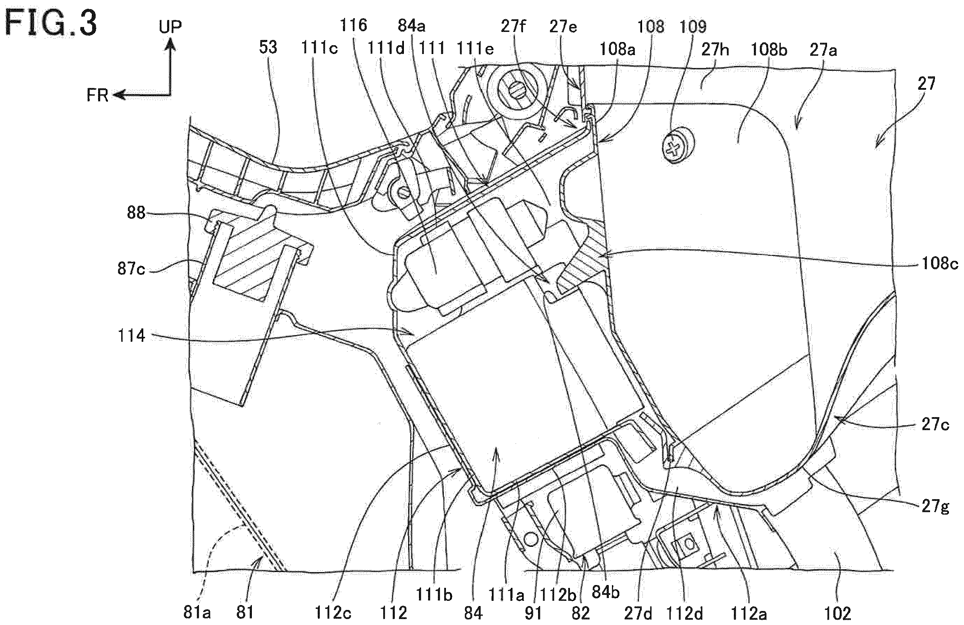

Figure 3 is a cross-sectional view showing the battery 84 and its periphery.

In the storage box 27, an opening 27f is formed in a front wall 27e of the main storage section 27a, and the opening 27f is closed with a maintenance lid 108 to be opened when maintenance of the battery 84 is performed. That is, the maintenance of the battery 84 is performed from a main storage section 27a side through the opening 27f. The maintenance lid 108 comprises a lid front wall 108a, and a pair of right and left lid side walls 108b extending rearward from right and left side edges of the lid front wall 108a. A lower edge of the lid front wall 108a is inserted in a groove 27d formed in a lower end portion of the front wall 27e of the main storage section 27a, and an upper edge of the lid front wall 108a is engaged with an inner surface side of an upper edge of the opening 27f. Furthermore, the right and left lid side walls 108b are removably fastened to right and left side walls 27h of the main storage section 27a with screws 109.

On a front side of the front wall 27e, there are mounted a first box 111 that bulges forward, and a second box 112 that covers a lower part of the first box 111.

The first box 111 comprises a bottom wall 111a, a front wall 111b, a front upper wall 111c, a top wall 111d, and a pair of right and left side walls 111e.

The bottom wall 111a is attached to a lower portion of an edge of the front wall 27e of the main storage section 27a, and extends obliquely downward and forward. The front wall 111b extends upward and obliquely forward from a front end of the bottom wall 111a. The front upper wall 111c extends upward from an upper end of the front wall 111b. The top wall 111d extends upward and obliquely rearward from an upper end of the front upper wall 111c, and is connected to an edge of an upper portion of the opening 27f. The right and left side walls 111e are connected to each of the bottom wall 111a, the front wall 111b, the front upper wall 111c and the top wall 111d.

The battery 84 is placed on the bottom wall 111a, and disposed in a lower part of a space 114 in the first box 111.

The second box 112 comprises a lower covering section 112a, a bottom wall 112b, a front wall 112c, and a pair of right and left side walls 112d.

The lower covering section 112a covers, from below and from the front, a lower bulging section 27g disposed to bulge downward in the front end portion of the bottom wall 27c of the main storage section 27a, and a rear portion of the bottom wall 111a of the first box 111. The guide plate 102 is attached to a rear portion of the lower covering section 112a. The bottom wall 112b extends obliquely downward and forward from an upper end of the lower covering section 112a under the bottom wall 111a of the first box 111 and along the bottom wall 111a. The front wall 112c bulges forward from a front end of the bottom wall 112b, and then extends upward and obliquely forward along the front wall 111b on a front side of the front wall 111b of the first box 111. The right and left side walls 112d are connected to each of the lower covering section 112a, the bottom wall 112b and the front wall 112c.

The bottom wall 111a, the front wall 111b and the right and left side walls 111e of the first box 111 described above are arranged doubly with the lower covering section 112a, the bottom wall 112b, the front wall 112c and the right and left side walls 112d of the second box 112.

In the maintenance lid 108, a protrusion 108c is formed to inhibit rattling of the stored battery 84. In a state where the maintenance lid 108 is attached to the front wall 27e of the main storage section 27a, the protrusion 108c protrudes forward and obliquely downward from a front surface of the maintenance lid 108, and is inserted in a concave portion 84a provided in the battery 84, to come in contact with or come close to a bottom surface 84b of the concave portion 84a.

Thus, the battery 84 is pressed with the protrusion 108c of the maintenance lid 108 so that the rattling of the battery 84 can be inhibited. A rattling preventive member does not have to be particularly provided for the battery 84, and hence, cost can be reduced.

In the space 114 of the first box 111, a starter motor magneto 116 is disposed above the battery 84.

As described above, the guide plate 102 is attached to the lower covering section 112a of the second box 112. Consequently, the bottom wall 27c of the main storage section 27a does not need to be processed for the attachment of the guide plate 102, and cost of the main storage section 27a can be reduced.

Furthermore, the guide plate 102 is provided on the lower bulging section 27g of the bottom wall 27c of the main storage section 27a. Consequently, a total length of the guide plate 102 can be shortened, and a support rigidity of the lower covering section 112a that supports the guide plate 102 may be minimized.

The upper tank 91 of the radiator 82 is located below and close to the bottom wall 112b of the second box 112.

As described above, the battery storage section 27b as a case has the double structure. Consequently, even when the battery 84 is disposed above the radiator 82, the battery 84 can be hard to be thermally affected by the radiator 82.

Furthermore, as shown in Figure 2 and Figure 3, the guide plate 102 is provided below the storage box 27 under the tandem seat 28 as a seat, and the guide plate 102 is disposed behind the radiator 82. According to this configuration, the guide plate 102 is provided, so that the exhaust air of the radiator 82 can be guided to flow laterally from the rear of the radiator 82 and laterally obliquely rearward. The exhaust air can be prevented from easily hitting the engine 41 or the like disposed behind the radiator 82.

Furthermore, the battery storage section 27b constitutes a front portion of the storage box 27, and the guide plate 102 is provided in the battery storage section 27b. According to this configuration, the guide plate 102 can be provided by using a part of the battery storage section 27b, and a member specially to provide the guide plate 102 becomes unnecessary, which can reduce cost.

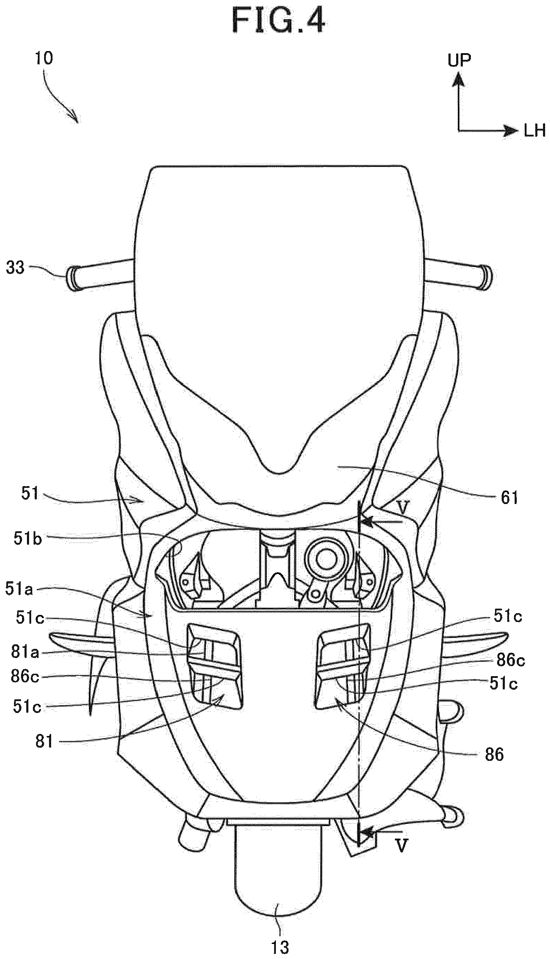

Figure 4 is a front view showing the motorcycle 10.

The front cover 51 of the motorcycle 10 comprises a front wall 51a that bulges rearward, below the head light 61. In the front wall 51a, an upper opening 51b and a plurality of intermediate openings 51c are formed.

The upper opening 51b is formed in a width larger than a width of the head light 61 in the vehicle width direction above the front wall 51a. The intermediate openings 51c are formed at positions below the upper opening 51b, the positions being two upper and lower positions on right and left sides, respectively. In front view, the plurality of intermediate openings 51c are superimposed on the flange 81a of the fuel tank 81 and right and left side surfaces 86c of the front half body 86.

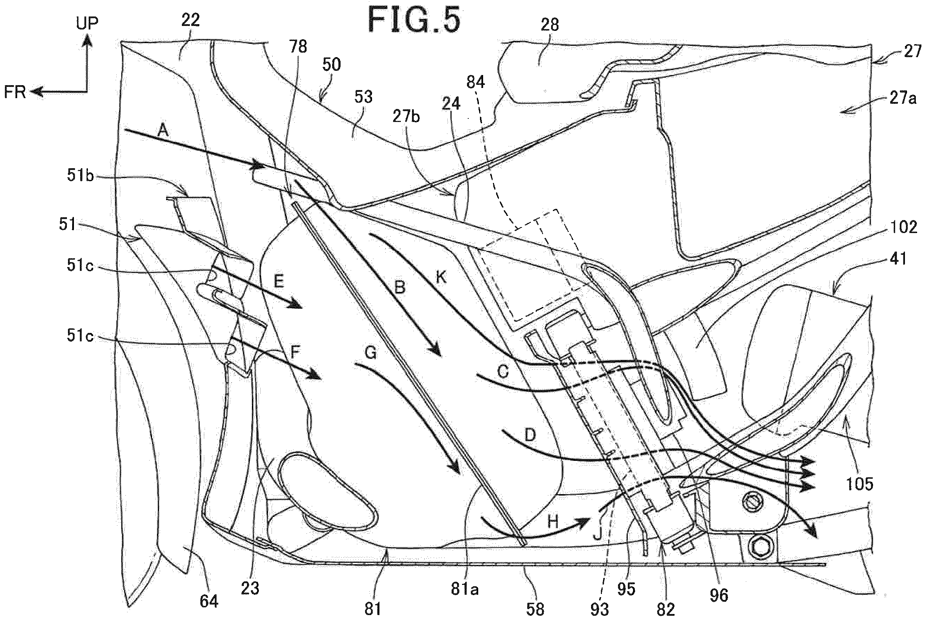

Figure 5 is a cross-sectional view taken along the V-V line of Figure 4.

The vehicle body cover 50 comprises the undercover 58 extending rearward from a lower end of the front cover 51. The undercover 58 is a component that covers the vehicle body lower part, and extends under the cylinder portion 105 of the engine 41. The undercover 58 is not provided with any openings.

Hereinafter, a flow of running wind in the vehicle body cover 50 will be described.

As shown by an arrow A, a part of the running wind flowing from the upper opening 51b of the front cover 51 into the vehicle body cover 50 flows to a rear of the flange 81a of the fuel tank 81 and flows obliquely downward toward the rear along the flange 81a as shown by an arrow B. Then, as shown by an arrow C and an arrow D, the running wind passes through the core 93 of the radiator 82. Furthermore, the running air changes its route to be bent downward (and laterally, or laterally obliquely rearward) by the guide plate 102, flows under the cylinder portion 105 of the engine 41, and is discharged to an outside of the vehicle body cover 50.

Furthermore, the running wind flowing through the plurality of intermediate openings 51c of the front cover 51 into the vehicle body cover 50 as shown by an arrow E and an arrow F flows obliquely downward toward the rear along the flange 81a in a front part of the fuel tank 81 as shown by an arrow G. Then, the running wind flows beyond a lower portion of the flange 81a and flows under the flange 81a and rearward from the flange 81a as shown by an arrow H. Furthermore, as shown by an arrow J, the running wind passes through the core 93 of the radiator 82, further flows under the cylinder portion 105 of the engine 41, and is discharged to the outside of the vehicle body cover 50.

Furthermore, the running wind flowing behind the flange 81a of the fuel tank 81 flows along and under the battery storage section 27b as shown by an arrow K, so that the battery storage section 27b can be cooled.

Additionally, a part of air in the vehicle body cover 50 flows along an upper surface of the undercover 58 toward the rear of the vehicle.

As described above, the flange 81a of the fuel tank 81 is provided upward to the front in the side view of the vehicle, so that it is possible to control the flow of the running wind flowing through an opening (the upper opening 51b and the intermediate openings 51c) of the front cover 51 into the vehicle body cover 50. That is, the flange 81a can be used as a large deflection plate.

In detail, the flange 81a allows the running wind to flow downward and rearward to the radiator 82 ahead of and behind the flange 81a. The running wind can be sufficiently applied to the radiator 82 to encourage the cooling. Furthermore, the flow of the exhaust air passed through the radiator 82 can be changed to the downward and rearward flow. The exhaust air can be guided downward under the cylinder portion 105 of the engine 41. As a result, in cooperation with the guide plate 102, the exhaust air of the radiator 82 can be prevented from easily hitting the cylinder portion 105.

For example, when the engine 41 having a large displacement is mounted in this vehicle and when a large-sized radiator having a larger capacity is disposed behind the fuel tank 81, it is possible to apply a sufficient volume of running wind to the large-sized radiator under control of the running wind by the flange 81a of the fuel tank 81. Therefore, a special deflection plate that controls the flow of the running wind or the like does not need to be used.

As shown in Figure 1, Figure 2, Figure 4 and Figure 5 described above, the motorcycle comprises, behind the front cover 51, the down frame 22 extending obliquely downward from the head pipe 21 toward the rear, the pair of right and left lower frame 23 extending downward from the right and left of the lower portion of the down frame 22 and then extending below the step floor 54 toward the rear, and the pair of right and left upper frames 24 extending obliquely downward from the middle portion of the down frame 22 toward the rear to be coupled to the right and left lower frame 23. The fuel tank 81 is disposed in the space 78 surrounded with the down frame 22, the right and left lower frame 23 and the right and left upper frames 24. The upper opening 51b and the intermediate openings 51c serving as the opening herein are provided in the front cover 51, the fuel tank 81 is provided behind the upper opening 51b and the intermediate openings 51c. The fuel tank 81 comprises the flange 81a extending toward the rear of the vehicle in the side view of the vehicle (specifically, obliquely downward toward the rear of the vehicle), and the radiator 82 is disposed behind the fuel tank 81.

According to this configuration, the wind taken inside through the upper opening 51b and the intermediate openings 51c of the front cover 51 can be guided along the flange 81a of the fuel tank 81 toward the radiator 82 irrespective of a size of the radiator 82, and an excellent flow of air around the radiator 82 can be acquired.

Furthermore, the battery 84 is disposed above the radiator 82, and the battery 84 is stored in the battery storage section 27b. Thus, the battery 84 is disposed above the radiator 82, so that a limited space can be effectively used.

Additionally, as shown in Figure 5, the flange 81a is inclined upward to the front in the side view of the vehicle, and the radiator 82 is disposed along the flange 81a. Consequently, the fuel tank 81 and the radiator 82 can be effectively arranged in the vehicle body.

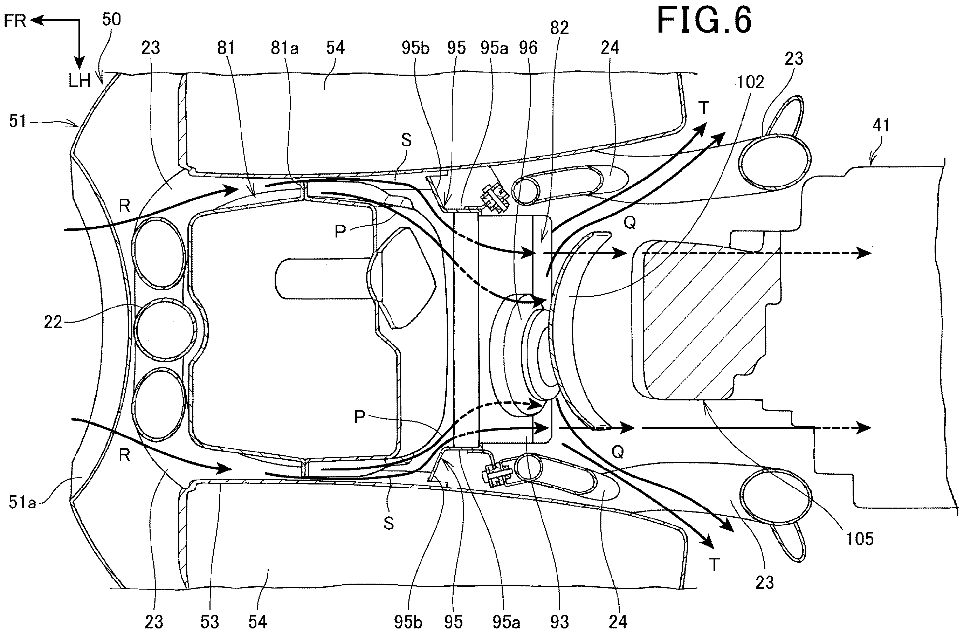

Figure 6 is a cross-sectional view taken along the VI-VI line of Figure 1.

Both side portions of the radiator 82 are elastically supported by the right and left upper frames 24 via rubbers, respectively.

Each of the guide members 95 provided in both side portions of the radiator 82 comprises a front-rear extending portion 95a extending along a side surface of the core 93 of the radiator 82 in a front-rear direction, and an inclined portion 95b extending forward obliquely laterally from a front edge of the front-rear extending portion 95a. The inclined portion 95b is a portion that collects running wind flowing outside the core 93 in the vehicle width direction toward a core 93 side.

The guide plate 102 disposed behind the radiator 82 forms a curved shape that is convex forward. Consequently, a route of running wind that hits the guide plate 102 from the front can be changed to a lateral route and a laterally obliquely rearward route.

Next, a flow of running wind in the vehicle body cover 50 will be described.

The running wind flowing through the upper opening 51b (see Figure 5) of the front cover 51 into the vehicle body cover 50 flows behind the flange 81a of the fuel tank 81 and rearward along the flange 81a to pass the core 93 of the radiator 82 as shown by an arrow P. Furthermore, as shown by an arrow Q, the running wind changes its route to a rearward obliquely lateral route by the guide plate 102, and flows rearward on both sides of the cylinder portion 105 of the engine 41.

Additionally, as shown by an arrow R, running wind guided through the intermediate openings 51c (see Figure 5) of the front cover 51 into the vehicle body cover 50 under the flange 81a of the fuel tank 81 flows rearward along the flange 81a. Furthermore, as shown by an arrow S, the wind flows beyond the lower portion of the flange 81a and flows under the flange 81a to flow rearward. The wind is guided to a core 93 side by the inclined portions 95b of the guide members 95, and passes the core 93. Afterward, as shown by an arrow T, the wind flows rearward along sides of and under the guide plate 102, and further flows rearward along both sides of and under the cylinder portion 105 of the engine 41.

In the vehicle of the present embodiment, a gap between the vehicle body cover 50 (specifically, the center cover 53 extending upward from an inner edge of each of the right and left step floors 54) and the flange 81a of the fuel tank 81 in the vehicle width direction is small. Consequently, a proceeding direction of a large part of the running wind flowing through an opening (the upper opening 51b and the intermediate openings 51c) of the front cover 51 into the vehicle body cover 50 is controlled by the flange 81a. Consequently, the flange 81a has a large influence on the flow of the running wind in the vehicle body cover 50.

The present invention is not limited to the application to the scooter type motorcycle 10, and can be applied to another type of motorcycle 10, or a straddled vehicle other than the motorcycle 10. Note that the straddled vehicle refers to vehicles straddled by a rider, and examples of the straddled vehicles include not only
the motorcycle (also including a motorbike) but also a
three-wheeled straddled vehicle and a four-wheeled straddled vehicle classified as ATV (all-terrain vehicle).

### [Reference Signs List]

- 10: motorcycle
- 21: head pipe
- 22: down frame
- 23: lower frame
- 24: upper frame
- 27: storage box
- 27b: battery storage section (a case)
- 28: tandem seat (a seat)
- 51: front cover
- 51b: upper opening (an opening)
- 51c: intermediate opening (an opening)
- 54: step floor
- 78: space
- 81: fuel tank
- 81a: flange
- 82: radiator
- 84: battery
- 102: guide plate

## Claims

1. A straddled vehicle comprising, behind a front cover (51), a down frame (22) extending obliquely downward from a head pipe (21) toward a rear, a pair of right and left lower frames (23) extending downward from a right and a left of a lower portion of the down frame (22) and then extending below a step floor (54) toward the rear, and a pair of right and left upper frames (24) extending obliquely downward from a middle portion of the down frame (22) toward the rear to be coupled to the right and left lower frames (23), wherein a fuel tank (81) is disposed in a space (78) surrounded with the down frame (22), the right and left lower frames (23) and the right and left upper frames (24), and wherein the fuel tank (81) comprises a flange (81a) extending toward the rear of the vehicle in a side view of the vehicle,
**characterised in that**
an opening (51b, 51c) is provided in the front cover (51), the fuel tank (81) is provided behind the opening (51b, 51c), a radiator (82) is disposed behind the fuel tank (81), a battery (84) is disposed above the radiator (82), and the battery (84) is stored in a case (27b).

2. A straddled vehicle according to claim 1, wherein
the case (27b) has a double structure.

3. A straddled vehicle according to claim 1 or 2, wherein a guide plate (102) is provided below a storage box (27) under a seat (28), and the guide plate (102) is disposed behind the radiator (82).

4. A straddled vehicle according to claim 3, wherein the case (27b) constitutes a front portion of the storage box (27), and the guide plate (102) is provided in the case (27b).

5. A straddled vehicle according to any one of claims 1 to 4, wherein the flange (81a) is inclined upward to a front in the side view of the vehicle, and the radiator (82) is disposed along the flange (81a).

## Patentansprüche

1. Grätschsitzfahrzeug, umfassend, hinter einer vorderen Abdeckung (51), einen Abwärtsrahmen (22), der sich schräg nach unten von einem Kopfrohr (21) nach hinten erstreckt, ein Paar von rechten und linken unteren Rahmen (23), das sich von rechts und links eines unteren Abschnitts des Abwärtsrahmens (22) zur Rückseite erstreckt und sich dann unterhalb eines Stufenbodens (54) zur Rückseite erstreckt, und ein Paar rechter und linker oberer Rahmen (24), das sich von einem mittleren Abschnitt des Abwärtsrahmens (22) schräg nach unten zur Rückseite erstreckt, um an den rechten und linken unteren Rahmen (23) gekoppelt zu werden, wobei ein Kraftstofftank (81) in einem Raum (78) angeordnet ist, der von dem Abwärtsrahmen (22), dem rechten und linken unteren Rahmen (23) und dem rechten und linken oberen Rahmen (24) umgeben ist, und wobei der Kraftstofftank (81) einen Flansch (81a) umfasst, der sich in einer Seitenansicht des Fahrzeugs zur Rückseite des Fahrzeugs erstreckt,
**dadurch gekennzeichnet, dass**
eine Öffnung (51b, 51c) in der Frontabdeckung (51) bereitgestellt ist, der Kraftstofftank (81) hinter der Öffnung (51b, 51c) bereitgestellt ist, ein Kühler (82) hinter dem Kraftstofftank (81) angeordnet ist, eine Batterie (84) über dem Kühler (82) angeordnet ist und die Batterie (84) in einem Gehäuse (27b) aufbewahrt ist.

2. Grätschsitzfahrzeug nach Anspruch 1, wobei das Gehäuse (27b) eine Doppelstruktur aufweist.

3. Grätschsitzfahrzeug nach einem der Ansprüche 1 oder 2,
wobei eine Führungsplatte (102) unter einem Aufbewahrungskasten (27) unter einem Sitz (28) bereitgestellt ist und die Führungsplatte (102) hinter dem Kühler (82) angeordnet ist.

4. Grätschsitzfahrzeug nach Anspruch 3, wobei das Gehäuse (27b) einen vorderen Abschnitt des Aufbewahrungskastens (27) bildet und die Führungsplatte (102) in dem Gehäuse (27b) bereitgestellt ist.

5. Grätschsitzfahrzeug nach einem der Ansprüche 1 bis 4, wobei der Flansch (81a) in der Seitenansicht des Fahrzeugs nach oben zu einer Vorderseite geneigt ist und der Kühler (82) entlang des Flansches (81a) angeordnet ist.

## Revendications

1. Véhicule de type à enfourcher comprenant, derrière un capot avant (51), un cadre descendant (22) s'étendant de manière oblique vers le bas depuis un tuyau d'amenée (21) vers une partie arrière, une paire de cadres inférieurs droit et gauche (23) s'étendant vers le bas depuis un côté droit et un côté gauche d'une partie inférieure du cadre descendant (22) et s'étendant ensuite en dessous d'un plancher de marchepied (54) vers l'arrière, et une paire de cadres supérieurs droit et gauche (24) s'étendant de manière oblique vers le bas depuis une partie centrale du cadre descendant (22) vers l'arrière pour être couplés aux cadres inférieurs droit et gauche (23), dans lequel un réservoir de carburant (81) est disposé dans un espace (78) entouré par le cadre descendant (22), les cadres inférieurs droit et gauche (23) et les cadres supérieurs droit et gauche (24), et dans lequel le réservoir de carburant (81) comprend un rebord (81a) s'étendant vers l'arrière du véhicule sur une vue de côté du véhicule,
**caractérisé en ce que**
une ouverture (51b, 51c) est prévue dans le capot avant (51), le réservoir de carburant (81) est prévu derrière l'ouverture (51b, 51c), un radiateur (82) est disposé derrière le réservoir de carburant (81), une batterie (84) est disposée au-dessus du radiateur (82), et la batterie (84) est stockée dans un logement (27b).

2. Véhicule de type à enfourcher selon la revendication 1, dans lequel le logement (27b) a une structure double.

3. Véhicule de type à enfourcher selon la revendication 1 ou 2,
dans lequel une plaque de guidage (102) est prévue en dessous d'un boîtier de stockage (27) sous un siège (28), et la plaque de guidage (102) est disposée derrière le radiateur (82).

4. Véhicule de type à enfourcher selon la revendication 3, dans lequel le logement (27b) constitue une partie avant du boîtier de stockage (27), et la plaque de guidage (102) est prévue dans le logement (27b).

5. Véhicule de type à enfourcher selon l'une quelconque des revendications 1 à 4, dans lequel le rebord (81a) est incliné vers le haut en direction d'une partie frontale sur la vue de côté du véhicule, et le radiateur (82) est disposé le long du rebord (81a).
